# EUROPEAN PATENT SPECIFICATION

(11) **EP 2 260 716 B1**
(45) Date of publication and mention of the grant of the patent: **12.02.2014**
(21) Application number: 10174834.1
(22) Date of filing: 21.03.1997
(51) Int. Cl.: A23D 7/02, A23D 9/05, A23D 7/00, A23C 11/04, A23L 1/30

(54) **Late addition of PUFA in infant formula preparation process**
Späte Zugabe von polyungesättigten Fettsäuren in einem Herstellungsverfahren von Säuglingsnahrung
Addition tardive d'acides gras polyinsaturés dans un procédé de fabrication de formulation nutritive pour nourrissons

(30) Priority: 26.03.1996 EP 96200815
(43) Date of publication of application: 15.12.2010
(62) Divisional of application: 06075047.8
(73) Proprietor: DSM IP Assets B.V., 6411 TE Heerlen (NL)
(72) Inventor: Van den Burg, Anthonius Cornelis, 2283 GB RIJSWIJK (NL); Groenendaal, Jan Willem, 2611 EE DELFT (NL)
(74) Representative: Elkenbracht, Johan Christiaan

(56) References cited:
- EP-A- 0 639 333
- EP-A1- 0 624 317
- WO-A-88/02221
- WO-A-92/13086
- WO-A-95/06414
- WO-A1-92/22291
- WO-A1-94/01001
- CH-A- 456 010
- FR-A- 1 390 268
- GB-A- 1 274 390
- GB-A- 1 346 888
- GB-A- 2 140 806
- US-A- 5 013 569
- STEEN ANDERSEN: "Microencapsulated marine omega-3 fatty acids for ue in the food industry", FOOD TECH EUROPE, FOOD TECH EUROPE, GB, 1 December 1994 (1994-12-01), pages 90-92, XP002533138, ISSN: 0969-0581
- PATENT ABSTRACTS OF JAPAN vol. 011, no. 282 (C-446), 11 September 1987 (1987-09-11) & JP 62, 079732, A, (AGENCY OF IND SCIENCE & TECHNOL), 13 April 1987 (1987-04-13)

## Description

### Field of the invention

The present invention relates to the field of nutrition, especially the field of infant nutrition. In particular, it relates to foods containing at least one polyunsaturated fatty acid (PUFA), such as an infant formula.

### Background of the invention

Recently, the importance of the addition of polyunsaturated fatty acids (PUFA's) to infant formulas has been acknowledged (see for instance US patent 4,670,285 and European Patent Publications EP-A-0231904 and EP-A-0404058).

Infant formula is usually prepared by the following general process.
1. Pasteurised milk (skimmed, evaporated or whole milk) is standardised by the addition of whey protein concentrate, minerals, water-soluble vitamins, trace elements and carbohydrates at high temperatures, for example 60°C.
2. Vegetable oil, oil-soluble emulsifiers, oil-soluble vitamins and anti-oxidants are mixed at high temperatures, for example 60°C.
3. The oil mixture obtained from 2 (an oil phase) is added to the standardised milk obtained from 1 (a water phase) with sufficient agitation to allow mixing.
4. The mixture obtained in 3 is homogenised in two stages at high temperature and pressure, for example 60°C at 150 and 30 bar.
5. The emulsion obtained under 4 is cooled to a low temperature, for example 5°C.
6. If desired, water-soluble vitamins, minerals and trace elements are added to the cooled emulsion.
7a. Emulsion 6· is sterilised on-line at ultra high temperature (UHT) and/or in appropriate containers to obtain a formula in the form of a sterile liquid; or
7b. Emulsion 6 is pasteurised and spray dried to give a spray dried powder which is filled into appropriate containers.
8. If desired, other dry ingredients, e.g. vitamins, minerals, trace elements, whey protein concentrate and carbohydrates can be added to the spray dried powder from 7b.

Thus at several points in the infant formula preparation process high temperatures and pressures are used, for example during the following process steps: .
- melting and blending fats in the oil phase (2);
- dissolving oil soluble emulsifiers in the oil phase before homogenisation (2);
- pasteurisation before homogenisation (in 4);
- homogenisation (4);
- sterilisation (7a);
- pasteurisation after homogenisation (7b); and/or
- spray drying, if performed (7b).

Typically, the PUFA's which are used for the supplementation of infant formula are in a triglyceride, phospholipid, fatty acid or fatty acid ester form and are oily liquids. The most convenient way to disperse PUFA-containing lipids homogeneously is by mixing them in with the oil phase before the homogenisation step. Thus, currently, the PUFA-containing lipid is added to the oil phase, because the PUFAs are usually contained in lipids which themselves are oils. This is much easier than trying to homogeneously disperse the PUFAs in the formula at a later stage, especially once the emulsion in (3) has been formed.

### Description of the invention

According to a first aspect of the present invention there is provided a process for the preparation of a foodstuff comprising docosahexaenoic acid (DHA), the process comprising:
a) providing an oil phase and an aqueous phase;
b) mixing the oil and aqueous phases to obtain an emulsion;
c) drying the emulsion to obtain a dried material; and
d) adding the DHA (to the dried material).

A second aspect of the present invention relates to a foodstuff prepared by the process of the first aspect.

It will thus be seen that in the invention the DHA is added at a relatively late stage in the preparation of the foodstuff. The advantage of this is that the or each PUFA (there may be more than one) is minimally exposed to conditions which can cause degradation.

There are usually three main causes of degradation during a conventional foodstuff preparation process that contains a PUFA. These are heating, drying and homogenisation. Heating can take place at a number of places during prior art preparative processes. This includes heating of the oil phase, as well as heating during homogenisation and sterilisation, and of course pasteurisation. The process of the invention seeks to minimise the exposure of the PUFAs to these various steps in order to maximise the preservation of the PUFA, and therefore to minimise degradation. Thus, the invention at its broadest can be regarded as a process for producing a DHA-containing foodstuff, where at least DHA is added at a stage after one or more potentially PUFA-degrading stage(s) have occurred. The DHA may therefore be added after one or more heating and/or drying stages.

This is entirely contrary to conventional wisdom, where the PUFA has, until now, been added to the starting oil blend, because of course the PUFA itself is an oil (and therefore there is no phase separation problem). It can be particularly difficult to disperse the PUFA for example, after the emulsification in (b), and so previously foodstuff manufacturers have tended to add the PUFA at the oil blend stage.

In addition, for existing foodstuff manufacturers, if it is decided to supplement the previously (non-PUFA containing) foodstuff with a PUFA, then this can easily be accomplished by adding the PUFA to the oil phase in (a). The reason for this is that one does then not need to significantly change the production plant, or significantly modify the process. Thus, since in recent times PUFAs have been found to be advantageous in, for example, infant formulas, the PUFAs have been added to the oil phase in existing processes.

It is not until the present invention that it has been realised that adding the PUFA at such an early stage can have disadvantages, because the PUFA becomes degraded. The invention may therefore provide a solution to the problem of preparing a PUFA-containing foodstuff where the PUFA is subjected to as few as possible degrading stages.

The PUFA can thus be added at a later stage than in a prior art process for the preparation for the foodstuff. This can then minimise the PUFAs exposure to unfavourable conditions. The PUFA is added after the drying step in (c). This drying may comprise spray drying.

The foodstuff is preferably one that is suitable for humans, such as babies and/or infants. It may therefore be an infant formula. Such a formula will usually comprise milk. However, the foodstuff may be a milk or milk substitute. The foodstuff can therefore be a powdered milk product.

The foodstuff can be a solid, in which case it is dried, and optimally in the form of a powder. Preferably, it is miscible or dispersible in an aqueous liquid, such as water. Such foodstuffs may therefore produce a milk-like product on addition to water.

Alternatively, the infant formula may be a powdered product, in which case this can be added to water. (The resulting liquid composition is often then warmed, e.g. to 35°C, before administration). In a solid form, foodstuff may not only be an infant formula, but may be a milk powder suitable for addition to coffee, tea, chocolate or other such beverages.

The DHA can be added in a variety of forms. It may be added as part or a component of a liquid or solid composition. If liquid, this may be a lipid composition and/or an oil. The oil may contain solely the DHA or it may contain a number of other ingredients. If a solid composition is used, the DHA may be encapsulated in capsules or it maybe in a powdered form, for example coated onto a solid carrier. For these latter forms reference is made to the copending International patent application filed on the same day as this case, in the name of Gist-brocades B.V., entitled " PUFA coated solid carrier particles for foodstuff".

Suitable microencapsulation techniques are, for example, described in WO-A-94/01001.

The DHA-containing composition, if a lipid, can be an oily liquid. Typically the DHA can be in the form of a phospholipid, triglyceride, or a mixture thereof. However, the DHA can also be in the form of a fatty acid or fatty acid ester.

If the composition containing the DHA is a liquid, then preferably it is an oil. The oil may come from a variety of sources, including vegetable, animal and microbial sources. Animal sources include fish oil or egg yolk lipid.

Microbial sources include algae. The algae may be a dinoflagellate and/or belong to the genus *Crypthecodinium.* In particular, the algae is *Crypthecodinium cohnii.*

In general, PUFAs are a C18, C20 C22 ω-3 or a C18, C20 or C22 ω-6 polyunsaturated fatty acid. Preferred are the C20 or the C22 ω-3 or C20 or C22 ω-6 polyunsaturated fatty acids. These include not only arachidonic acid (ARA) but also eicosapentaenoic acid (EPA) and docosahexaenoic acid (DHA). Suitable methods for preparing these PUFAs are disclosed in the copending International application filed on the same day as the present application, also in the name of Gist-brocades B.V., and entitled "Preparation of microbial polyunsaturated fatty acid (PUFA) containing oil from a pasteurised biomass".

More than one PUFA can be added. In this case, two or mor PUFAs may be from a different source, and therefore one may add either the PUFAs separately (as separate compositions) or mix the two PUFAs (to give a single composition) before addition during the foodstuff preparation process. For example, fish oil contains DHA which may be mixed with one or more microbial oils containing another PUFA (e.g. ARA).

In the process of the invention it is preferred that the starting oil phase does not contain any PUFAs. This is because they are suitably added later. The drying in (c) can be performed by any suitable technique known in the art, although spray drying is preferred.. Suitably in (d) the oil and aqueous phases are homogenised after initial mixing. The emulsion so far will usually be an oil in water emulsion.

It is preferred that the source of the DHA is a microbial oil and/or a fish oil. In this case, vegetable oils alone (i.e. not part of a mixture or blend) can be excluded such as maize, soy and/or corn oil. Preferably, the foodstuff will not contain a compound containing 2,2,4-trimethyl-2,2-dihydroquinoline moiety.

The aqueous phase can be thought of as a water-containing phase. It is thus possible for this aqueous phase to be an emulsion, for example a milk or milk product, such as evaporated, skimmed or semi-skimmed milk. Thus, the aqueous phase can refer to a substance where the continuous (or bulk) phase is aqueous.

Preferably the DHA is added immediately after the drying in (c). The drying in preferred embodiments results in a spray-dried powder. The PUFA can then be applied, or added, for example to give a coating of the PUFA onto the spray dried powder. In this case, the PUFA composition is preferably a liquid, such as an oil. This oil may additionally contain lecithin, for example at 0.2 to 0.3%. The composition may therefore be a lecithin/PUFA mixture.

If the PUFA containing composition is an oil, such as a vegetable oil, then it can be used not only to apply the PUFA, but also the lecithin.

A suitable food stuff preparation process, in particular or an infant formula is outlined on page 10.

The point at which the PUFAs are added in prior art processes is shown: this is where the PUFA is added to the oil blend. Also shown is the preferred stage of addition of the or each PUFA according to the present invention, much later on in the infant formula (IF) preparation process.

As the foodstuff is to be a solid, for example a powder then preferably the DHA is added to the powder. Here the DHA can be sprayed and/or mixed onto the powder. Suitably the DHA will remain liquid at room temperature, and therefore it can be absorbed on or coated on particles constituting the powder. Here the DHA will suitably be in a liquid form (that is to say, the DHA has preferably not solidified. Indeed, suitably the DHA is a liquid at room temperature. Preferably, the DHA will have a melting point that is from 5°C to -10°C. In the powder form, the foodstuff preferably has a water content that is less than 5%, and preferably less than 1 or 2% (by weight).

In another embodiment of the invention, the DHA is present in a "pre-mix". This can be an infant formula constituent additionally containing lactose and whey proteins and optionally vitamins and minerals. This can be added to the powder, that is to become the infant formula, after spray drying.

Preferably in stage (b) after mixing the oil and aqueous phases the resulting mixture is subjected to homogenisation. Here, the mixture can be forced through a small nozzle or hole at high pressure, and suitably at high shear forces. This can be accomplished using any well known technique in the art.

As previously discussed, the preferred method of drying the emulsion is by spray drying. Here the emulsion can be reduced to a water content of from 2 to 5%. Spray drying techniques are well known in the art: usually one provides a tower at the top of which is a spinning disk or nozzle onto which or through which the emulsion is passed. This yields (often fine) droplets in the form of a mist or aerosol. The resulting particles are dried at a temperature of from 70 or 80°C to 140°C.

The resulting particles can have an average diameter of from 5 to 1000 µm, such as from 50 to 250 µm. Generally speaking it consists of a matrix of the components that were in the aqueous phase, the inside of which are the oil particles that were previously present in the oil in water emulsion.

The resulting particles can be further dried, for example on a fluidised bed. Here, particles may be subjected to hot air, and may be moved either on a conveyer belt or on a vibrating surface. Suitably there is a temperature gradient, such as from 80 to 20°C. The particles can be dried at from 3 to 10 such as from 4 to 6 minutes. Preferably, they will have a water content of from 0.5 to 6 such as from 1 to 3% by weight.

In a pre-mix some of the spray dried particles can be added to a "pre-mix" of the various components that can be added to infant formula.

The DHA can then be added. This may be as a liquid or solid (e.g. lipid composition). The DHA can be added to the dried material directly after spray drying, during spray drying (if the temperature is lowered) or later at the same time as one or more other ingredients such as vitamins, minerals, trace elements, whey protein concentrate and/or carbohydrates) are added.

For example, the DHA may be added when the powder is present (e.g. being dried) on a fluidised bed.

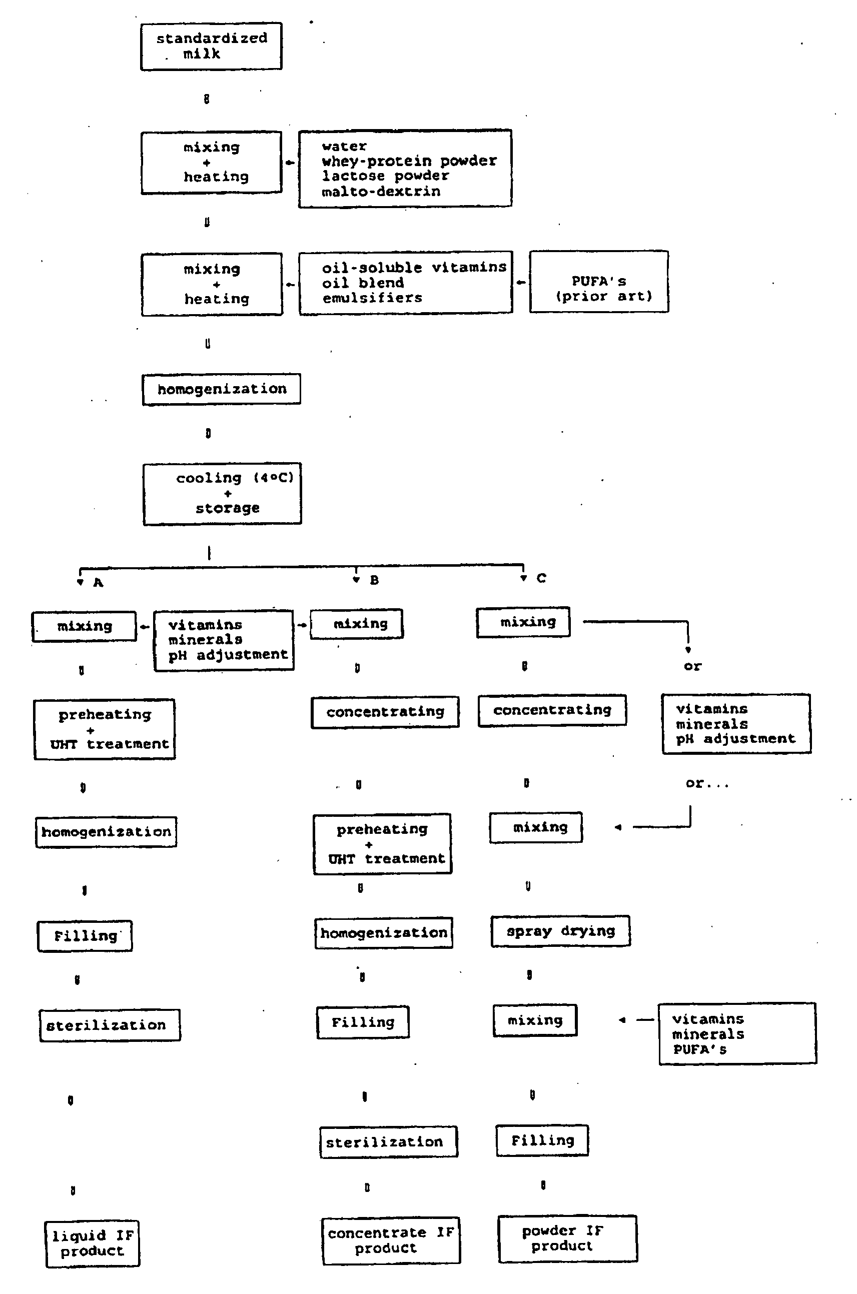

In the prior art the PUFAs are added to the oil blend which is then mixed and heated with other ingredients. This is then homogenised to form an emulsion. The emulsion is then cooled. The various processes then diverge depending on the type of infant formula (IF) product to be produced.

Taking process C this produces a solid (e.g. powder) IF product, tne DHA is added after the drying stage (referred to as (c) stage previously); again this maybe before the material is added to, or filled, into a vessel. There is no sterilising stage here, since that can be performed after addition of the powdered product to water.

Thus, in a preferred process, the invention in the first aspect comprises:
a) providing an aqueous phase, or a water-containing phase, to which is optionally added other ingredients such as water, whey proteins (usually solids: a by-product of cheese-making), lactose, and/or maltodextrin. All these ingredients can be mixed and/or heated. This phase may in fact be an emulsion, and is preferably derived from milk;
b) providing an oil phase. This phase may contain vitamins and/or emulsifiers. Once added, the oil phase can be mixed and/or heated;
c) mixing the oil and aqueous phases, to form an emulsion: preferably, this is then homogenised;
d) optionally, cooling the (e.g. homogenised) emulsion, which may then be stored;
e) optionally, adding further ingredients such as vitamins, minerals and/or pH adjusters;
f) optionally concentrating the resulting material;
h) performing drying (such as spray drying);
i) adding one or more PUFA(s) and optionally ingredients such as vitamins and/or minerals;
j) filling a container with the material obtained.

In a particularly preferred process of the present invention, the foodstuff is prepared as follows:
a) Standardising milk (either pasteurised, skimmed, semi-skimmed or half-fat milk) by addition of whey protein concentrate, minerals, water-soluble vitamins, trace elements and/or carbohydrates. This standardisation is achieved by mixing and/or heating, for example at 50 to 70°C;
b) Preparing an oil phase, containing an oil (e.g. vegetable) oil, oil-soluble emulsifiers, oil-soluble vitamins and/or antioxidants. These ingredients can be mixed and then preferably heated (to improve mixing), for example at 50 to 70°C;
c) Mixing the oil phase with the aqueous phase, and optionally heating, so as to form an emulsion;
d) Homogenising the emulsion. This can be performed at an elevated temperature and/or pressure. It may also be performed in one or more steps, such as in two stages. If heating is performed, then this is from preferably at from 50 to 70°C. If elevated pressures are used, then for example in a first stage this is at from 120 to 180 such as from 140 to 160 bar (Atm). In a second stage, the pressure can be at from 15 to 45, such as from 25 to 35 bar (Atm):
e) Cooling the homogenised emulsion. This may be to a temperature of from 3 to 7°C, such as from 4 to 6°C;
f) Adding to the cooled emulsion other ingredients such as water soluble vitamins, minerals and/or trace elements;
g) Pasteurising the emulsion of (f) and drying it (such as by spray drying) in order to give a dried material, such as a spray dried powder (sterilisation here may not be necessary since the water content can be so low that microorganisms will not be able to grow);
h) Adding the or each PUFA, and optionally adding other (usually dry) ingredients, for example vitamins, minerals, trace elements, whey protein concentrate and/or carbohydrates.

As will have been apparent, a number of other various ingredients can be added to the foodstuff. These include sugars, proteins, vitamins, emulsifiers, minerals and/or pH adjusters. In the final foodstuff, the proteins are preferably present at from 0 to 35% by weight, the vitamins can be present at from 0 to 2% by weight, emulsifiers can be present at from 0 to 2% by weight as well, and minerals can be present at from 0 to 3% by weight.

Suitable minerals include calcium lactate, calcium chloride, zinc sulphate and/or copper sulphate. Preferred carbohydrates can include meltodextrin and/or lactose monohydrate.

Vitamins can include water soluble or oil soluble vitamins. Water soluble vitamins can include vitamin B₁ (thiamine hydrochloride), vitamin B₂ (riboflavin) vitamin B₆ (pyridoxine hydrochloride), vitamin B₁₂ (cyanocobalamin), folic acid, niacinamide, calcium-D-pantothante, biotin, sodium ascorbate, carnitine (HCl) and/or taurine. Oil soluble vitamins can include vitamin A (acetate), vitamin D (calciferol), vitamin E (tocopherol acetate), vitamin K₁ (phytomenadione).

There are four embodiments of the process of the invention which are exemplified. These are the preferred means of adding the DHA during the preparation process.

The first is that the DHA is added as a liquid (such as a homogeneous lipid) to the dried material, directly after spray drying, preferably while the dried material is on a fluidised bed.

In a second, the DHA is again added as a liquid, but this time as an oil in water emulsion. Again, the PUFA can be added directly after spray drying, preferably while the dried material is on a fluidised bed.

Thirdly, the DHA can be added as a powder: here the DHA may be absorbed and/or coated onto solid carriers, such as solid carrier particles. Again, the DHA can be added after the spray drying process, preferably by means of mixing with the dried material, such as in a conventional mixer.

Fourthly, the DHA can be added as a solid, again as a powder, but here the DHA is microencapsulated. Again, the DHA is preferably added after the spray drying process, and may be mixed with the dried material in a conventional mixer.

The invention will now be described by way of example only, with reference to the following examples. These are provided by means of illustration.

### EXAMPLES 1 TO 4

Four different infant formula preparation processes were performed. These different methods correspond to the four embodiments described earlier. The type of PUFA composition employed, and how it is produced, are described in Table 1. The mode of addition of the PUFA containing composition, and at what stage in the process it was added, is described in Table 2.

A sensory analysis of the foodstuffs prepared according to the Examples was performed, in particular for taste and smell (olefactory analysis). All the infant formulas made had a good taste and had a neutral smell. These were compared with a prior art process where the PUFA was added to the starting oil blend. The final infant formula from that process gave a bad odour (smelling of fish).

In as far as the PUFA composition of example 1 does not contain DHA, it is to be seen as comparative to the claimed invention.

**TABLE 1**

| The Preparation of Liquid and Powdered Lipid Pufa Compositions for Addition in Infant Formula Porcesses | | | |
|---|---|---|---|
| Example | - type of Pufa composition | - type of Pufa oil, supplier - concentration Pufa in Pufa oil - concentration Pufa and other components in composition | production method for Pufa composition |
| 1 | - lipid composition as homogeneous liquid | - fungal Arachidonic acid oil, Gist-brocades Gb - 40% ARA in Pufa oil - 27% Pufa oil in lipid composition   30% lecithin   43% vegetable oil containing natural anti-oxidants | - vegetable oil was warmed up till 50°C, - lecithin was added and mixed, - Pufa oil was added and mixed, - the resulting oily liquid was stored under nitrogen. |
| 2 | - lipid composition as oil in water emulsion | - fish Docosahexaenoic acid oil (Pronova) - 30% DHA in Pufa oil - 10% Pufa oil in lipid composition   6% lactose   3% sodium caseinate   81% water | - to water of 45°C sodium caseinate, lactose and Pufa oil was added, - an emulsion is prepared by homogenisation with a Janke Kunkel Ultra Turrax T50 equipped with a G45MF rotor/stator at 8000 rpm, - the resulting emulsion was stored under nitrogen. |
| 3 | - powdered composition as Pufa's adsorbed on solid carrier | - fungal Arachidonic acid oil, Gb - 40% ARA in Pufa oil - 10% ARA-Pufa oil in lipid composition - fish Docosahexenoic acid oil, Nippon - 20% DHA in Pufa oil - 10% DHA-Pufa oil in lipid composition | - a mixture of ARA- and DHA -Pufa oil was prepared and mixed with lactose in a Lödige FM ploughshare mixture by adding the oil with a rate of 10kg per minute. - the resulting powder was packed under nitrogen. |
| | | 80% lactose in lipid composition | |
| 4 | - powdered composition as Pufa microcapsules | - fungal Arachidonic acid oil, Gb - 40% ARA in Pufa oil - 20% ARA-Pufa oil in lipid composition   77% maltodextrin DE 15   3% sodium caseinate | - ARA- and DHA-microcapsules were prepared separately as follows ; - in water with a temperature of 45°C sodium caseinate and maltodextrin are dissolved, the Pufa oil added and mixed, - the mixture was warmed up to 60°C and homogenized resulting in a oil in water emulsion, - the emulsion was spray dried and the resulting microcapsules packed under nitrogen. |
| | | - fish Docosahexaenoic acid oil, Pronova - 20% DHA in Pufa oil - 20% DHA-Pufa oil in lipid composition   77% maltodextrin DE 15   3% sodium caseinate | |

**TABLE 2**

| The Addition of Liquid and Powdered Lipid Pufa Compositions in Infant Formula Processes after the Spray Drying Step | | | |
|---|---|---|---|
| Example | - type of Pufa composition - type of infant formula (IF) | - point at which Pufa composition is added to infant formula process | - method of addition of the lipid Pufa composition to infant formula process |
| 1 | - lipid composition, homogeneous liquid - term dry instant IF (to be reconstituted, 13g + 90ml water) | - in fluidized bed, directly after spray drying | - a batch of 200kg dry term IF containing 2kg of lipid Pufa composition as homogeneous liquid was prepared as follows; - to the IF with a dry matter content of 4% the lipid composition with a temperature of 50°C is sprayed with a rate of 0.5kg per hour on the moving fluidized IF proceeding through the fluidized bed with a rate of 50kg per hour, the temperature was set at such a level that finally a loss on drying content of the IF between 1 and 2% is realized. |
| 2 | - lipid composition, oil in water emulsion, - preterm (for infants born early, or before normal term) dry instant IF (to be reconstituted, 13g + 90ml water) | - in fluidized bed, directly after spray drying | - a batch of 300kg dry preterm IF was prepared by adding 13.87kg of lipid Pufa composition as oil in water emulsion as follows ; - to the IF with a loss on drying content of 2% the lipid composition was sprayed with a rate of 2.3kg per hour on the moving fluidized IF proceeding through the fluidized bed with a rate of 50kg per hour, the temperature set at such a level that finally a loss on drying content of the IF between 1 and 2% was realized |
| 3 | - powdered composition, Pufa adsorbed on solid carrier - term dry instant IF (to be reconstituted, 13g + 90ml water) | - in mixer, after the spray drying process | - a batch of 1000kg dry term IF containing 27kg of lipid Pufa composition as Pufa's adsorbed on a carrier was prepared as follows; - a premix was prepared containing 27kg lipid Pufa composition, the necessary amounts of vitamins and minerals and lactose to a total amount of 200 kg, - the premix is added to 800kg of spray dried IF and mixed in a conical Nauta 50RK mixer. |
| 4 | - powdered composition, Pufa microcapsules - pre term instant IF (to be reconstituted, 13g + 90ml water) | - in mixer, after the spray drying process | - a batch of 3000kg dry preterm IF containing 182kg of lipid Pufa composition as microcapsules divided in 78kg ARA-microcapsules and 104kg DHA-microcapsules was prepared as follows; - a premix was prepared containing 182kg lipid Pufa composition, the necessary amounts of vitamins and minerals and lactose to a total amount of 600kg, - the premix was added to 2400kg of spray dried IF and mixed in a conical Nauta 100RK mixer. |

## Claims

1. A process for preparing a foodstuff comprising docosahexaenoic acid (DHA), the process comprising:
(a) providing an oil phase and an aqueous phase;
(b) mixing the oil and aqueous phases to obtain an emulsion;
(c) drying the emulsion to obtain a dried material; and
(d) adding the DHA to the dried material.

2. A process according to claim 1, wherein the DHA is added while comprised in a lipid composition which optionally is a liquid.

3. A process according to claim 2 wherein the lipid containing composition is a homogenous liquid or an emulsion or a solid.

4. A process according to claim 3 wherein the lipid containing composition is a powder and/or the emulsion from (b) is homogenised.

5. A process according to any preceding claim wherein the DHA is added after one or more heating and/or drying stages.

6. A process according to any preceding claim wherein the foodstuff is an infant formula.

7. A process according to any preceding claim wherein the foodstuff is a solid powder.

8. A process according to any preceding claim wherein the DHA is from a microbial oil.

9. A process according to any preceding claim wherein the aqueous phase is an emulsion wherein the continuous (or bulk) phase is aqueous.

10. A process according to any preceding claim wherein the aqueous phase is a milk or milk product.

11. A process according to any preceding claim comprising:
a) providing an aqueous phase comprising whey protein and which comprises, or is derived from, milk;
b) providing an oil phase comprising one or more vitamins and/or emulsifiers;
c) mixing the oil and aqueous phases to form an emulsion, and homogenising the emulsion;
d) cooling the homogenised emulsion;
e) optionally adding one or more vitamins, minerals and/or pH adjusters;
f) optionally concentrating the resulting material;
g) drying the emulsion to form a powder;
h) adding the DHA and optionally one or more vitamins and/or minerals.

## Patentansprüche

1. Verfahren zum Herstellen eines Nahrungsmittels, das Docosahexaensäure (DHA) enthält, wobei das Verfahren folgende Stufen aufweist:
(a) Bereitstellen einer Ölphase und einer wässrigen Phase;
(b) Mischen der Ölphase und der wässrigen Phase, um eine Emulsion zu erhalten;
(c) Trocknen der Emulsion, um einen getrockneten Stoff zu erhalten; und
(d) Zugeben der DHA zu dem getrockneten Stoff.

2. Verfahren nach Anspruch 1, worin die DHA zugegeben wird, während sie in einer Lipidzusammensetzung enthalten ist, die gegebenenfalls eine Flüssigkeit ist.

3. Verfahren nach Anspruch 2, worin die lipidhaltige Zusammensetzung eine homogene Flüssigkeit oder eine Emulsion oder ein Feststoff ist.

4. Verfahren nach Anspruch 3, worin die lipidhaltige Zusammensetzung ein Pulver ist und/oder die Emulsion aus (b) homogenisiert ist.

5. Verfahren nach einem der vorstehenden Ansprüche, worin die DHA nach einer oder mehreren Erwärmungs- und/oder Trocknungsstufen zugegeben wird.

6. Verfahren nach einem der vorstehenden Ansprüche, worin das Nahrungsmittel eine Säuglingsnahrung ist.

7. Verfahren nach einem der vorstehenden Ansprüche, worin das Nahrungsmittel ein Feststoffpulver ist.

8. Verfahren nach einem der vorstehenden Ansprüche, worin die DHA aus einem mikrobiellen Öl stammt.

9. Verfahren nach einem der vorstehenden Ansprüche, worin die wässrige Phase eine Emulsion ist, in der die kontinuierliche Phase (oder Hauptphase) wässrig ist.

10. Verfahren nach einem der vorstehenden Ansprüche, worin die wässrige Phase eine Milch oder en Milchprodukt ist.

11. Verfahren nach einem der vorstehenden Ansprüche mit den folgenden Stufen:
(a) Bereitstellen einer wässrigen Phase, die Molkenprotein aufweist und Milch enthält oder von Milch abgeleitet ist;
(b) Mischen der Ölphase, die eine oder mehrere Vitamine und/oder Emulgatoren enthält;
(c) Mischen der Ölphase und der wässrigen Phase zur Bildung einer Emulsion und Homogenisieren der Emulsion;
(d) Abkühlen der homogenisierten Emulsion;
(e) Gegebenenfalls Zugeben eines oder mehrerer Vitamine; Mineralien und/oder pH-Einsteller;
(f) Gegebenenfalls Konzentrieren des erhaltenen Stoffes;
(g) Trocknen der Emulsion zur Bildung eines Pulvers;
(h) Zugeben der DHA und gegebenenfalls eines oder mehrerer Vitamine und/oder Mineralien.

## Revendications

1. Procédé de préparation d'un produit alimentaire comprenant de l'acide docosahexaénoïque (DHA), ledit procédé comprenant les étapes consistant à :
a) fournir une phase d'huile et une phase aqueuse ;
b) mélanger les phases d'huile et aqueuse pour obtenir une émulsion ;
c) sécher l'émulsion pour obtenir un matériau seché ; et
d) ajouter le DHA au matériau seché.

2. Procédé selon la revendication 1, dans lequel la DHA est ajouté alors qu'il est compris dans une composition de lipide qui est optionnellement un liquide.

3. Procédé selon la revendication 2, dans lequel la composition contenant le lipide est un liquide homogène ou une émulsion ou un solide.

4. Procédé selon la revendication 3, dans lequel la composition contenant le lipide est une poudre et/ou l'émulsion obtenue en (b) est homogénéisée.

5. Procédé selon l'une quelconque des revendications précédentes, dans lequel le DHA est ajoutée après une ou plusieurs étapes de chauffage et/ou séchage.

6. Procédé selon l'une quelconque des revendications précédentes, dans lequel le produit alimentaire est un aliment pour bébé.

7. Procédé selon l'une quelconque des revendications précédentes, dans lequel le produit alimentaire est un liquide ou une poudre solide.

8. Procédé selon l'une quelconque des revendications précédentes, dans lequel le DHA provient d'une huile microbienne.

9. Procédé selon l'une quelconque des revendications précédentes, dans lequel la phase aqueuse est une émulsion dans laquelle la phase continue (ou en vrac) est aqueuse.

10. Procédé selon l'une quelconque des revendications précédentes, dans lequel la phase aqueuse est un lait ou un produit laitier.

11. Procédé selon l'une quelconque des revendications précédentes, comprenant les étapes consistant à :
a) fournir une phase aqueuse comprenant de la protéine de petit lait et qui comprend, ou qui est dérivée de lait ;
b) fournir une phase d'huile comprenant un(e) ou plusieurs vitamines et/ou émulsifiants ;
c) mélanger les phases d'huile et aqueuse pour former une émulsion, et homogénéiser l'émulsion ;
d) refroidir l'émulsion homogénéisée ;
e) optionnellement, ajouter un(e) ou plusieurs vitamines, minéraux et/ou ajusteurs de pH ;
f) optionnellement, concentrer le matériau obtenu ;
g) sécher l'émulsion pour former une poudre ;
h) ajouter le DHA et optionnellement un(e) ou plusieurs vitamines et/ou minéraux.
